# EUROPEAN PATENT SPECIFICATION

(11) **EP 4 169 685 B1**
(45) Date of publication and mention of the grant of the patent: **22.05.2024**
(21) Application number: 21204505.8
(22) Date of filing: 25.10.2021
(51) Int. Cl.: B27N 5/00, A47G 19/00, B27N 3/04, B27N 3/12, B27N 3/18, C08L 97/02, C09J 105/14, C09D 7/20

(54) **METHOD FOR PRODUCING REUSABLE AND BIODEGRADABLE ARTICLES**
VERFAHREN ZUR HERSTELLUNG VON WIEDERVERWENDBAREN UND BIOLOGISCH ABBAUBAREN GEGENSTÄNDEN
PROCÉDÉ DE PRODUCTION D'ARTICLES RÉUTILISABLES ET BIODÉGRADABLES

(43) Date of publication of application: 26.04.2023
(73) Proprietor: Marelja, Stipo, 10961 Berlin (DE)
(72) Inventor: Marelja, Stipo, 10961 Berlin (DE)
(74) Representative: Ter Meer Steinmeister & Partner

(56) References cited:
- WO-A1-2015/126582
- WO-A1-2021/180208
- US-A1- 2018 370 071

## Description

The present invention relates to a method for preparing a synthetic wood article. The article comprises cellulose, lignin and a binder. The method comprises at least two hot molding steps with a preform being obtained after a first hot molding step and a coating solution comprising lignin being applied to the preform prior to the second hot molding step. The present invention further relates to an apparatus for carrying out the above method and an article obtained by the method.

Tons of packaging waste are generated each and every year. According to recent statistics, the annual packaging waste in the European Union amounts to incredible 175 kilograms per inhabitant.

Due to EU directives, a high share of this packaging waste is, thankfully, recovered which means that either recycling or energy recovery takes place. In this context, recycling refers to the process of turning waste into a new substance or product whereas energy recovery is realized via incineration, gasification or pyrolysis of the waste material. In any case, however, recovery is not straightforward. For recycling, waste needs to be sorted and, once separated, sophisticated purification and/or sterilization techniques are required. Often, it is also necessary to process the waste material in such a way that it can be completely reshaped. Energy recovery, on the other hand, suffers from moderate efficiency because a certain loss of combustion heat cannot be avoided.

In view of the above, it appears to be smarter to tackle the packaging issue differently, namely by preventing or reducing generation of waste that needs to be recovered. One strategy is to produce materials that can be reused and that are, nevertheless, biodegradable after a certain number of reuse cycles.

To that end, US 8,772,406 B2 presents a synthetic wood article comprising biomimetic macromolecules and a method for its preparation. The method comprises a step of dissolving lignin and a component selected from cellulose or hemicellulose in an ionic liquid and obtaining the article. However, ionic liquids belong to the specialty chemicals and are, thus, not suitable for large-scale production.

A different process for producing a biodegradable material based on synthetic wood is known from WO 2015/126582 A1. This process can dispense with ionic liquids and comprises the steps of providing a lignocellulosic biomass feedstock; fractionating the feedstock in the presence of an acid, a solvent for lignin, and water, to generate cellulose-rich solids and a liquid containing hemicellulose and lignin; depositing at least some of the lignin, from the liquid, onto a surface of the cellulose-rich solids to generate a lignin-coated cellulose material; and recovering the lignin-coated cellulose material. Yet, the deposition of lignin only creates a superficial coat. Lignin does not penetrate deeply into the cellulose material. The properties of such a lignin-coated cellulose material are, thus, still similar to the properties of uncoated cellulose material. Due to that, the final article is unsuitable for many applications, for example for applications in which a high mechanical strength of the article is required.

WO2021180208 A1 discloses manufacturing of a profile comprising mixing pulp and viscous polymer, pre-pressing, drying, hot-pressing, adding acidified lignin to the pulp, filtering, drying, hot-pressing and molding to obtain profile which is flame-retardant.

Hence, there has been a need for the development of a new method of preparing synthetic wood articles which overcomes the abovementioned disadvantages.

These objectives are solved by the method according to claim 1.

The method according to the present invention is defined in claim 1.

This method is an ecological way of producing packaging materials and has the potential to replace traditional plastic packaging material. All starting materials in the method can be obtained from renewable raw materials so that oil-based resources can be preserved. Even the alcohol that is used in step (iii) can be bioethanol. Apart from that, it is also possible to recover the alcohol in order to further improve sustainability.

The inventive method is also superior over conventional methods for producing synthetic wood articles. By preparing a preform comprising cellulose and applying the lignin only later, as a coating solution, it is possible to obtain articles with a very dense, hard and uniform surface. The surface is water and moisture-repellant and not sensitive to weak acids or bases as encountered, for example, in foodstuff. Thus, the article does not show any swelling behavior when it comes into contact with fluids.

Overall, the inventive method is an ecological concept for producing materials that are suitable for contact with food, either as food packaging material, as tableware or cutlery. The synthetic wood articles that can be produced by the inventive method are even dishwasher-save and insensitive to sterilizing agents. Also, they can easily be cleaned with hot water. This allows to reuse them several times.

Above all, the method helps to reduce the amount of waste that needs to be recovered each year. Since the synthetic wood articles are biodegradable, they can simply be disposed at the end of their lifecycle, *i.e.* after repeated use.

The first and second hot press molding step may also be denoted a "first and second hot press molding step under steam removal". Evaporation of either aqueous solution from the pulp or alcohol from the lignin coating solution occurs during hot press molding. The resulting steam may be removed via a drain passage in the hot mold press. Suitable hot mold presses are known to the skilled person, for example from the devices that are used to produce egg cartons.

As far as the components of the synthetic wood article are concerned, cellulose is a linear polysaccharide of D-glucose residues linked by β(1→4)-glycosidic bonds.

Lignin is a polymeric substance of substituted aromatics which can be found in plant tissue. The properties of lignin hugely differ depending on the extraction process and the kind of plant from which it is extracted. Lignosulfonates (also called lignin sulfonates and sulfite lignins) are products of sulfite pulping. Kraft lignins (also called sulfate lignins) are obtained from the Kraft pulping process. The Kraft process is a chemical pulping process where chipped wood is subjected to high temperature in a broth containing sodium hydroxide and sodium sulfide. High quality lignin that has a more pleasant odor is obtained by the Organosolv process. The term "lignin" as used herein also encompasses functionalized or chemically modified lignins, for example, carboxylated and acylated lignin, as well as sulfated lignins and lignins emanating from the kraft process.

The binder is selected from hemicellulose, carboxymethyl cellulose and combinations thereof.

In contrast to cellulose, which is made of a single type of monomer, hemicellulose comprises heteropolysaccharides which are formed by a variety of different monomers. Hemicellulose may, for example, comprise or consist of xylans, arabinoxylans, galactoglucomannans, manans, derivatives thereof, or combinations thereof.

Carboxymethyl cellulose is a water-soluble cellulose ether containing a certain number of carboxymethyl groups per anhydroglucose unit. The number of carboxymethyl groups per anhydroglucose unit may be from 0.1 to 1.5, preferably from 0.4 to 1.2.

The use of hemicellulose as a binder is particularly preferred when the starting materials are obtained from lignocellulosic feedstock. Lignocellulosic biomass comprises or substantially consists of cellulose, hemicellulose and lignin. Hence, hemicellulose is anyway obtained in the extraction process of lignocellulosic biomass. Instead of discarding this valuable material, it can be advantageously used to enhance the strength of the synthetic wood article. The weight ratio of binder : cellulose may be from 0.3 : 1 to 1 : 1, preferably from 0.9 : 1 to 1:1. This especially applies to the embodiment of the method in which the pulp in step i) further comprises the binder. When using the abovementioned weight ratio, it is ensured that an appropriate degree of crosslinking is achieved and that the synthetic wood article, thus, has a high density and an excellent tensile strength.

If the binder is not already present in the pulp in step i) of the method, the preform as obtained by the first hot press molding step is coated with a binder coating solution. This needs to take place prior to the application of the lignin coating solution. The coating with a binder coating solution can also be called an impregnation procedure. The binder coating solution may be applied by spraying. Afterwards and before the lignin coating solution is applied, it is preferred to dry the binder coated preform so that solvent can evaporate.

In a further preferred embodiment, the method comprises a step of adding a color pigment or a dye to the pulp prior to step ii). In this way, the synthetic wood articles can be obtained in any desired color. This makes the produced articles more attractive as tableware. Moreover, packaged goods, in particular packaged foodstuff, can then be distinguished by color coding.

The alcohol in the lignin coating solution is selected from the group consisting of methanol, ethanol, butanol, ethylene glycol and combinations thereof. The alcohol may be the same alcohol that has been used in the Organosolv process. This reduces the total amount of substances that are needed and further facilitates the production process.

The lignin coating solution may further comprise from 0.1 to 10.0 wt.-% of a crosslinking agent, preferably urea or a compound comprising an urea group. The crosslinking agent accelerates the curing of the lignin coat. While it may last up to 20 minutes to cure the lignin in the second hot press molding step at a temperature of 100-150°C without crosslinking agent, the curing can be completed in 1-10 minutes in the presence of a crosslinking agent.

In another preferred embodiment, the lignin coating solution further comprises from 0.1 to 5.0 wt.-% of an oxidizing agent, preferably selected from the group consisting of hydrogen peroxide, a peroxycarbonate compound, a perborate compound and combinations thereof. Just like the crosslinking agent, the oxidizing agent is beneficial in view of shortening the time necessary for curing the lignin coat.

Preferably, the second hot press molding step comprises subjecting the coated preform to a specific temperature and a specific pressure for a defined amount of time. The temperature is preferably from 100 to 150°C. The pressure is preferably from 10 to 500 bar, particularly preferably from 10 to 250 bar. The time, *i.e.* the duration for which the mentioned temperature and pressure is applied is preferably at least 60 seconds. With these parameters, a synthetic wood article can be produced that is 4-10 times as hard as natural wood. In this context the general rule is that the more pressure is applied, the harder the synthetic wood article gets.

When the pulp comprises a defined amount x_{C} of cellulose, an amount x_{L} of lignin in the lignin coating solution is preferably 0.4 x_{C} to 1.2 x_{C}, more preferably 0.9 x_{C} to 1.1 x_{C}.

Furthermore, when the pulp comprises a defined amount x_{C} of cellulose, the sum x_{B} of an amount of the binder in the pulp and the optional binder coating solution is preferably 0.25 x_{C} to 1.2 x_{C}, more preferably 0.9 x_{C} to 1.1 x_{C}. This results in an article comprising or consisting of 33-60 wt.-% cellulose, about 33-16 wt.-% of a binder and about 23-33 wt.-% lignin. Preferably, an article with equal weight ratios of cellulose, binder and lignin is obtained.

Alternatively, when the pulp comprises a defined amount x_{C} of cellulose, an amount x_{L} of lignin in the lignin coating solution may be 0.6 x_{C} to 1.2 x_{C} and the sum x_{B} of an amount of the binder in the pulp and the optional binder coating solution may be 0.3 x_{C} to 1.2 x_{C}. In this way, an article is obtained which comprises or consists of about 33-50 wt.-% cellulose, about 33-16 wt.-% of a binder and about 33 wt.-% lignin.

The alcohol which evaporates after the lignin coating solution has been applied in step iii) is preferably condensed. It can be reused in one or more further production cycles. Before reuse, the alcohol can be further processed, for example by purification.

In one embodiment, step ii) may include forming the pulp into a preform having the shape of a cup, a piece of cutlery, a plate or a bowl. In this way, the synthetic wood articles can be used for preparing and/or enjoying a meal. The cup, plate or bowl may, moreover, not only be helpful to hold foodstuff for the duration of a meal. They can also be used for packaging and/or storing foodstuff, in particular when they are sealed accordingly. In the present application, packaging is any material that is used to contain, protect, handle, deliver or present goods. Items like bottles, containers, cans, wrappers, pallets and drums can all be classified as packaging.

Due to the hard and smooth surface of the synthetic wood, soaking of the articles can be effectively avoided. Sauces and liquids do not penetrate into the structure of the article so that it is safe to clean the articles either under hot water or in the dishwasher. As a cleaning procedure for the articles the same procedures as for usual tableware and cutlery may be used. After repeated use of the article, for example after 10, 20 or 50 usages or use cycles, the article can be collected in the publicly managed organic waste or disposed on the private composter. Complex recovery procedures are not needed as the article is completely biodegradable.

The present disclosure also involves an apparatus for carrying out the method described above.

The apparatus may comprise at least two different units.

A first unit is a hot mold press in which the at least two hot press molding steps can be performed. The mold preferably has the shape of a cup, a piece of cutlery, a plate or a bowl. It is additionally preferred, if the mold is exchangeable so that different articles may be produced with the same apparatus.

Further preferred configurations of the hot mold press are known to the skilled person, for example from the devices used to produce egg cartons.

The second unit of the apparatus is the coating machine. The specifics of this machine are known from conventional painting and coating plants.

The present disclosure also involves an article that is obtained by the method as outlined above.

The nature of the present invention will become more clearly apparent from the following preparation example. However, the example should not be understood as limiting, wherein the scope of protection is defined by the appended claims.

### Preparation Example

i + ii) In a first step, a preform is formed from pulp (pulp slush). For this purpose, 1 kg cellulose fibers of a still wet pulp are kneaded with 1 kg hemicellulose or alternatively 1 kg low molecular weight carboxymethylcellulose to a composition which is just still shapeable. The texture of the composition can be easily controlled and adjusted by the addition of water. The specific water content depends on the cellulose fiber quality. This composition is molded into a bowl-like form in an extruder and simultaneously hot-dried. The hot pressing removes the water. A cellulose/hemicellulose based preform is obtained, which is dimensionally stable and can be further dried and stored if required.
iii) In a second step, 1 kg of a non-modified or weakly modified lignin (*e.g*. UPM/Halle) is dissolved in 2 1 ethanol. The preform is then impregnated with this special lignin (*e.g*. Organosolv lignin) from ethanolic solution. This process step has to be done in a special chamber, *e.g*. a closed paint plant or machine, so that the ethanol is recovered by evaporation and circulates.
iv) Subsequently, this impregnated preform is again taken to the hot press (*e.g.* from step i+ii) and pressed at 125° C for 15 minutes. It is thereby compacted and chemically cross-linked so that the preform is converted into a synthetic wood bowl. The final composition of the synthetic wood bowl is about 1 : 1 : 1 by weight of cellulose : hemicellulose : lignin. After demolding the bowl can be used as a package for foodstuff. The bowl is very hard, dishwasher-safe and water resistant.

## Claims

1. A method for preparing an article comprising cellulose, lignin and a binder,
the method comprising the steps of
i) providing a pulp comprising cellulose,
ii) subjecting the pulp to a first hot press molding step to obtain a preform,
iii) applying a lignin coating solution comprising or consisting of lignin and an alcohol to the preform,
iv) subjecting the coated preform to a second hot press molding step,
wherein the pulp in step i) further comprises the binder and/or wherein the preform is further coated with a binder coating solution prior to step iii), and
wherein the binder is selected from hemicellulose, carboxymethyl cellulose and combinations thereof.

2. The method according to claim 1, wherein a weight ratio of binder : cellulose is from 0.3 : 1 to 1 : 1, preferably from 0.9 : 1 to 1 : 1.

3. The method according to one of the preceding claims, further comprising a step of adding a color pigment or dye to the pulp prior to step ii).

4. The method according to one of the preceding claims, wherein the alcohol in the lignin coating solution is selected from the group consisting of methanol, ethanol, butanol, ethylene glycol and combinations thereof.

5. The method according to one of the preceding claims, wherein the lignin coating solution further comprises from 0.1 to 10.0 wt.-% of a crosslinking agent, preferably urea or a compound comprising an urea group.

6. The method according to one of the preceding claims, wherein the lignin coating solution further comprises from 0.1 to 5.0 wt.-% of an oxidizing agent, preferably selected from the group consisting of hydrogen peroxide, a peroxycarbonate compound, a perborate compound and combinations thereof.

7. The method according to one of the preceding claims, wherein the second hot press molding step involves subjecting the coated preform to a temperature from 100 to 150°C and a pressure preferable from 10 to 500 bar for at least 60 seconds.

8. The method according to one of the preceding claims, wherein,
when the pulp comprises a defined amount x_{C} of cellulose,
an amount x_{L} of lignin in the lignin coating solution is 0.4 x_{C} to 1.2 x_{C}, preferably 0.9 x_{C} to 1.1 x_{C}, and/or
the sum x_{B} of an amount of the binder in the pulp and the optional binder coating solution is 0.25 x_{C} to 1.2 x_{C}, preferably 0.9 x_{C} to 1.1 x_{C}.

9. The method according to one of the preceding claims, wherein the alcohol which evaporates after the lignin coating solution has been applied in step iii) is condensed and optionally further processed for reuse.

10. The method according to one of the preceding claims, wherein step ii) includes forming the pulp into a preform having the shape of a cup, a piece of cutlery, a plate or a bowl.

## Patentansprüche

1. Verfahren zur Herstellung eines Gegenstandes, der Cellulose, Lignin und ein Bindemittel umfasst,
wobei das Verfahren die folgenden Schritte umfasst
i) Bereitstellen eines Zellstoffs, der Cellulose umfasst,
ii) Unterziehen des Zellstoffs einem ersten Heißpressformschritt, um einen Vorformling zu erhalten,
iii) Aufbringen einer Ligninbeschichtungslösung, die Lignin und einen Alkohol umfasst oder daraus besteht, auf den Vorformling,
iv) Unterziehen des beschichteten Vorformlings einem zweiten Heißpressformschritt,
wobei der Zellstoff in Schritt i) weiterhin das Bindemittel umfasst und/oder wobei der Vorformling vor Schritt iii) weiterhin mit einer Bindemittelbeschichtungslösung beschichtet wird, und
wobei das Bindemittel ausgewählt ist aus Hemicellulose, Carboxymethylcellulose und Kombinationen davon.

2. Verfahren nach Anspruch 1, wobei das Gewichtsverhältnis von Bindemittel : Cellulose von 0,3 : 1 bis 1 : 1, vorzugsweise von 0,9 : 1 bis 1 : 1 beträgt.

3. Verfahren nach einem der vorangehenden Ansprüche, ferner umfassend einen Schritt der Zugabe eines Farbpigments oder Farbstoffs zu dem Zellstoff vor Schritt ii).

4. Verfahren nach einem der vorhergehenden Ansprüche, wobei der Alkohol in der Ligninbeschichtungslösung ausgewählt ist aus der Gruppe bestehend aus Methanol, Ethanol, Butanol, Ethylenglykol und Kombinationen davon.

5. Verfahren nach einem der vorhergehenden Ansprüche, wobei die Ligninbeschichtungslösung ferner 0,1 bis 10,0 Gew.-% eines Vernetzungsmittels, vorzugsweise Harnstoff oder eine Verbindung mit einer Harnstoffgruppe, umfasst.

6. Verfahren nach einem der vorhergehenden Ansprüche, wobei die Ligninbeschichtungslösung ferner 0,1 bis 5,0 Gew.-% eines Oxidationsmittels, vorzugsweise ausgewählt aus der Gruppe bestehend aus Wasserstoffperoxid, einer Peroxycarbonatverbindung, einer Perboratverbindung und Kombinationen davon, umfasst.

7. Verfahren nach einem der vorhergehenden Ansprüche, wobei der zweite Heißpressformschritt das Aussetzen des beschichteten Vorformlings einer Temperatur von 100 bis 150°C und einem Druck von vorzugsweise 10 bis 500 bar für mindestens 60 Sekunden umfasst.

8. Verfahren nach einem der vorhergehenden Ansprüche, wobei,
wenn der Zellstoff eine definierte Menge x_{C} an Cellulose enthält,
eine Menge x_{L} an Lignin in der Ligninbeschichtungslösung 0,4 x_{C} bis 1,2 x_{C}, vorzugsweise 0,9 x_{C} bis 1,1 x_{C}, beträgt und/oder
die Summe x_{B} einer Menge des Bindemittels in dem Zellstoff und der optionalen Bindemittelbeschichtungslösung 0,25 x_{C} bis 1,2 x_{C}, vorzugsweise 0,9 x_{C} bis 1,1 x_{C} beträgt.

9. Verfahren nach einem der vorhergehenden Ansprüche, wobei der Alkohol, der nach dem Auftragen der Ligninbeschichtungslösung in Schritt iii) verdampft, kondensiert und gegebenenfalls zur Wiederverwendung weiterverarbeitet wird.

10. Verfahren nach einem der vorhergehenden Ansprüche, wobei Schritt ii) das Formen des Zellstoffs zu einem Vorformling in Form einer Tasse, eines Bestecks, eines Tellers oder einer Schale umfasst.

## Revendications

1. Procédé pour préparer un article comportant de la cellulose, de la lignine et un liant, le procédé comportant les étapes consistant à :
i) fournir une pâte comportant de la cellulose,
ii) soumettre la pâte à une première étape de moulage par compression à chaud afin d'obtenir une préforme,
iii) appliquer sur la préforme une solution de revêtement de lignine comportant de la lignine et un alcool ou constituée de ceux-ci,
iv) soumettre la préforme revêtue à une seconde étape de moulage par compression à chaud,
dans lequel la pâte de l'étape i) comporte en outre le liant et/ou dans lequel la préforme est en outre revêtue d'une solution de revêtement de liant avant l'étape iii), et
dans lequel le liant est choisi parmi de l'hémicellulose, de la carboxyméthyl cellulose et des combinaisons de celles-ci.

2. Procédé selon la revendication 1, dans lequel un rapport pondéral liant:cellulose est de 0,3:1 à 1:1, de préférence de 0,9:1 à 1:1.

3. Procédé selon l'une des revendications précédentes, comportant en outre une étape consistant à ajouter un pigment de couleur ou un colorant à la pâte avant l'étape ii).

4. Procédé selon l'une des revendications précédentes, dans lequel l'alcool dans la solution de revêtement de lignine est choisi parmi le groupe constitué de méthanol, d'éthanol, de butanol, d'éthylène glycol et de combinaisons de ceux-ci.

5. Procédé selon l'une des revendications précédentes, dans lequel la solution de revêtement de lignine comporte en outre de 0,1 à 10,0 % en poids d'un agent de réticulation, de préférence de l'urée ou un composé comportant un groupe urée.

6. Procédé selon l'une des revendications précédentes, dans lequel la solution de revêtement de lignine comporte en outre de 0,1 à 5,0 % en poids d'un agent oxydant, de préférence choisi parmi le groupe constitué de peroxyde d'hydrogène, d'un composé de peroxycarbonate, d'un composé de perborate et de combinaisons de ceux-ci.

7. Procédé selon l'une des revendications précédentes, dans lequel la seconde étape de moulage par compression à chaud implique de soumettre la préforme revêtue à une température de 100 à 150 °C et une pression de préférence de 10 à 500 bar pendant au moins 60 secondes.

8. Procédé selon l'une des revendications précédentes, dans lequel
lorsque la pâte comporte une quantité définie x_{C} de cellulose,
une quantité x_{L} de lignine dans la solution de revêtement de lignine est de 0,4 x_{C} à 1,2 x_{C}, de préférence de 0,9 x_{C} à 1,1 x_{C}, et/ou
la somme x_{B} d'une quantité du liant dans la pâte et de la solution de revêtement de liant facultative est de 0,25 x_{C} à 1,2 x_{C}, de préférence de 0,9 x_{C} à 1,1 x_{C}.

9. Procédé selon l'une des revendications précédentes, dans lequel l'alcool qui s'évapore après l'application de la solution de revêtement de lignine à l'étape iii) est condensé et facultativement traité ultérieurement en vue d'une réutilisation.

10. Procédé selon l'une des revendications précédentes, dans lequel l'étape ii) inclut la formation de la pâte en une préforme ayant la forme d'une tasse, d'un couvert, d'un plateau ou d'un bol.
